Europäisches Patentamt

European Patent Office

Office européen des brevets

(11) Publication number: **0 106 414**
**B1**

(12) **EUROPEAN PATENT SPECIFICATION**

(45) Date of publication of patent specification: **04.01.89**

(21) Application number: **83201470.8**

(22) Date of filing: **14.10.83**

(51) Int. Cl.⁴: **F 25 B 1/10,** F 04 B 35/04,
H 02 K 33/18

(54) Refrigerating system comprising a two-stage compression device.

(30) Priority: **18.10.82 NL 8204005**

(43) Date of publication of application:
**25.04.84 Bulletin 84/17**

(45) Publication of the grant of the patent:
**04.01.89 Bulletin 89/01**

(84) Designated Contracting States:
**CH DE FR GB IT LI NL**

(56) References cited:
**BE-A- 646 038**
**DE-A-2 223 570**
**DE-A-2 409 298**
**DE-C- 866 227**
**FR-A- 674 967**
**FR-A-1 472 032**
**FR-A-1 511 439**
**GB-A- 798 005**
**GB-A-1 011 853**
**US-A-2 559 367**
**US-A-4 291 258**
**US-A-4 345 442**
**US-A-4 353 220**

(73) Proprietor: **N.V. Philips' Gloeilampenfabrieken**
**Groenewoudseweg 1**
**NL-5621 BA Eindhoven (NL)**

(72) Inventor: **Kuijpers, Lambert Johannes Maria**
**c/o INT. OCTROOIBUREAU B.V. Prof. Holstlaan 6**
**NL-5656 AA Eindhoven (NL)**
Inventor: **Asselman, George Albert Apolonia**
**c/o INT. OCTROOIBUREAU B.V. Prof. Holstlaan 6**
**NL-5656 AA Eindhoven (NL)**

(74) Representative: **Bos, Kornelis Sjoerd et al**
**INTERNATIONAAL OCTROOIBUREAU B.V. Prof.**
**Holstlaan 6**
**NL-5656 AA Eindhoven (NL)**

## Description

The invention relates to a refigerating system comprising a two-stage compression device, a condenser and at least two evaporators with throttling devices, each evaporator being associated to a respective stage of the compression device.

Such a refigerating system is disclosed in US—A—2 559 367. The compression device described in this Patent Specification comprises a low-pressure compressor and a high-pressure compressor, whose pistons are each driven separately by a common electric motor. Such a system does not permit an independent temperature control of the evaporators.

It is the object of the invention to provide a refigerating system comprising two evaporators whose temperatures can be controlled independently of each other, the system having a minimal power consumption.

To this end the refigerating system according to the invention is characterized in that the compression device comprises a two-stage free-piston compressor with two coaxially arranged cylinders, in each of which a piston is movable, which pistons each influence a compression space with their head faces which are remote from each other, which pistons are rigidly connected to each other and driven by a linear motor, the rigid connection carrying the moving part of the linear motor, and there is provided an electric control circuit adopted to apply an a.c. voltage and the d.c. component to the linear drive motor and to vary the a.c. voltage and the d.c. component such that both the stroke of the pistons and the centre position of the pistons can be controlled indendently of each other by an a.c. voltage variation and a variation of the d.c. component respectively.

Since both the centre position and the stroke of the pistons of the compressor are controllable independently of each other an independent control of the two evaporator temperatures is possible using one continuously operating compressor. The continuous operation of the compressor means that both the two evaporators and the common condenser are loaded continuously and hence to a minimal extent which reduces the temperature difference across these heat exchangers and thus the difference between the average evaporator and condenser temperatures (compared with an on/off compressor refigerating system), resulting in an improved system efficiency.

It has to be noticed that US—A—4 353 220 shows a linear motor driven free piston compressor with two opposed pistons connected by a common rod carrying the moving part of the linear motor.

Further the GB—A—1 011 853 discloses an electromechanical vibrator in which a direct current through a coil of the vibrator serves as a bias to balance a force of an output member.

An embodiment of the invention will now be described in more detail, by way of example, with reference to the drawing, in which

Figure 1 schematically shows the refigerating system and

Figure 2 shows the electric control circuit.

The refigerating system comprises a compression device 1, a condenser 2, a first evaporator 3 with a throttle valve 4 and a second evaporator 5 with a throttle valve 6. The throttle valves can be adjustable restrictions. The compression device comprises a compressor housing 7 with two coaxially arranged cylinders 8 and 9 in each of which a piston, 10 and 11 respectively, is movable. The head faces 12 and 13 of the respective pistons each influence a compression space 14 and 15 respectively. The pistons are rigidly connected to a moving soft-iron core 19 of a linear motor 18 by means of connecting rods 16 and 17 respectively. Around the soft-iron core two coil windings 20 and 21 are arranged. The stator of the linear motor comprises an iron ring 22 on both sides of which there are arranged radially oriented magnets with pole pieces 23 and 24 respectively for cooperation with the coil windings. The stator is suspended in the compressor housing 7 by means of stiff springs 25.

From the high-pressure compresion space 15 a pressure line 26 leads to the condenser 2 and hence to the evaporators 3 and 5 which are arranged in parallel. From the evaporator 3 a suction line 27 leads to the low-pressure compression space 14. From the evaporator 5 a suction line 28 leads to the space inside the hermetically sealed compressor housing 7. From the low-pressure compression space 14 a pressure line 29 also leads to the space inside the compressor housing. Via a line 30, in which an intermediate cooler 31 is arranged, the space inside the compressor housing communicates with the high-pressure compression space 15.

The refrigerant vapour from the evaporator 3, which has the lowest temperature, is fed to the first stage, i.e. the low-pressure compression space 14. The vapour leaves this stage with a temperature of approximately 60°C and after having passed the intermediate cooler 31 with a temperature of approximately 40°C it goes to the inlet of the second stage, i.e. the high-pressure compression space 15. The advantage of this low inlet temperature is that the compressor efficiency increases. The vapour from the evaporator 5 goes, after being heated by motor heat losses inside the space of the compressor housing 7 and subsequently cooled by the intermediate cooler 31, to the second stage.

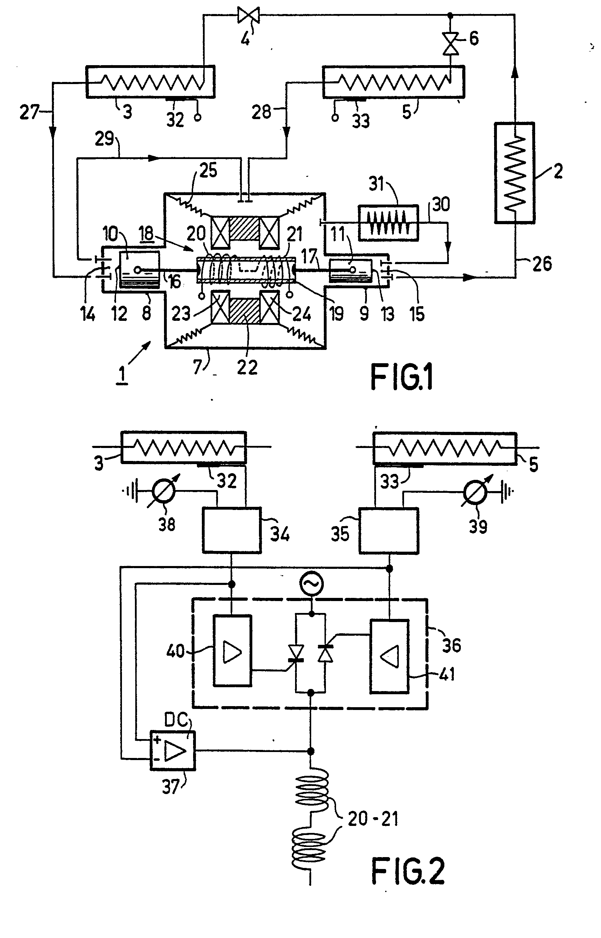

Especially in a system in which two compartments have to be maintained at different temperatures, such as a refrigerator-freezer combination, this system reduces the power consumption. During continuous operation the capacities of the evaporator can be varied independently of each other by varying the stroke and adjusting the centre position of the pistons. Increasing the stroke results in an increase of the capacity of both evaporators. Depending on the

2.

required refrigeration the refrigerating capacity of one of the evaporators may be further increased, whilst that of the other is reduced, resulting in an independent control of each evaporator. Increasing the stroke is effected by a voltage variation (for example through phase-shift control of a alternating voltage), and the centre position is varied by the addition of a d.c. component. The voltage is an a.c. motor drive voltage which normally has a d.c. component. This is schematically represented in Figure 2. In the comparators 34, 35 the signals of two temperature-sensitive elements 32 and 33, which detect the temperatures of the evaporators 3 and 5 respectively are compared with the reference signals of the adjustable reference sources 38, 39, respectively. The resultant signals (with hysteresis in case of thermostats) are transferred to trigger-circuits with thyristor control (or triac) 36, which supplies an a.c., which may have been phase-shifted, to the motor coil 20—21. Each of the two triggering circuits 40, 41 influences the a.c. by phase cutting either the positive or negative part, thus causing a phase shift and amplitude change. This results in different powers delivered to each of the two pistons. Moreover, the two resultant signals are added *via* a d.c. amplifier 37 and the resultant thereof is applied to the coil as a d.c. component for controlling the centre position.

## Claim

A refrigerating system comprising a two-stage compression device, a condenser and at least two evaporators with throttling devices, each evaporator being associated to a respective stage of the compression device characterized in that the compression device comprises a two-stage free-piston compressor with two coaxially arranged cylinders, in each of which a respective piston is movable, which pistons each influence a compression space with their head faces which are remote from each other, which pistons are rigidly connected to each other and driven by a linear motor, the rigid connection carrying the moving part of the linear motor, and there is provided an electrical control circuit adapted to apply an a.c. voltage and a d.c. component to the linear drive motor and to vary the a.c. voltage and the d.c. component such that both the stroke of the pistons and the centre position of the pistons can be controlled independently of each other by an a.c. voltage variation and a variation of the d.c. component respectively.

## Patentanspruch

Kühlsystem mit einer zweistufigen Verdichtungsvorrichtung, einem Kondensator und wenigstens zwei Verdampfern mit Drosselvorrichtungen, wobei jeder Verdampfer mit einer betreffenden Stufe der Verdichtungsvorrichtung zusammenarbeitet, dadurch gekennzeichnet, dass die Verdichtungsvorrichtung einen zweistufigen Verdichter mit freiem Kolben mit zwei koaxial angeordneten Zylindern aufweist, wobei in jedem derselben ein betreffender Kolben beweglich ist, wobei diese Kolben mit ihren in einem Abstand voneinander liegenden Stirnflächen je einen Verdichtungsraum beeinflussen, wobei die Kolben fest miteinander verbunden sind und von einem Linearmotor angetrieben werden, wobei die feste Verbindung den beweglichen Teil des Linearmotors trägt und dass eine elektrische Steuerschaltung vorgesehen ist, die dem linearen Antriebsmotor eine Wechselspannung und einen Gleichstromanteil zuführt und die Wechselspannung sowie den Gleichstromanteil derart ändert, dass der Hub der Kolben und die Mittenlage der Kolben durch eine Wechselspannungsänderung bzw. eine Änderung des Gleichstromanteils beide unabhängig voneinander regelbar sind.

## Revendication

Système de réfrigération comportant un dispositif de compression à deux étages, un condenseur et au moins deux évaporateurs munis de dispositifs d'étranglement, chaque évaporateur étant associé à un étage du dispositif de compression, caractérisé en ce que le dispositif de compression comporte un compresseur à pistons libres à deux étages muni de deux cylindres coaxiaux dans chacun desquels peut se déplacer un piston, les pistons influençant chacun un espace de compression par leurs faces avant situées à l'opposé l'une de l'autre, alors qu'ils sont liés rigedement entre eux et qu'ils sont entraînés par un moteur linéaire, la liaison rigide portant la partie mobile du moteur linéaire, et en ce qu'il est prévu un circuit de réglage électrique conçu pour appliquer une tension alternative et une composante de courant continu au moteur d'entraînement linéaire et pour changer la tension alternative et la composante de courant continu de façon qu'aussi bien la course des pistons que la position médiane des pistons puissent être réglées indépendamment l'une de l'autre par une variation de la tension alternative d'une part et une variation de la composante de courant continu d'autre part.

FIG.1

FIG.2